# EUROPÄISCHE PATENTSCHRIFT

(11) **EP 0 705 219 B1**
(45) Veröffentlichungstag und Bekanntmachung des Hinweises auf die Patenterteilung: **09.04.1997**
(21) Anmeldenummer: 94918797.5
(22) Anmeldetag: 26.05.1994
(51) Int. Cl.: C01B 31/02

(54) **VERFAHREN ZUR ABTRENNUNG VON FULLEREN AUS FULLERENHALTIGEM RUSS**
METHOD OF SEPARATING FULLERENES OUT OF CARBON BLACK CONTAINING THEM
PROCEDE DE SEPARATION DE FULLERENES A PARTIR DE NOIR DE CARBONE LES CONTENANT

(30) Priorität: 08.06.1993 DE 4319049
(43) Veröffentlichungstag der Anmeldung: 10.04.1996
(73) Patentinhaber: HOECHST AKTIENGESELLSCHAFT, 65926 Frankfurt am Main (DE)
(72) Erfinder: MOHN, Holger, D-63571 Gelnhausen (DE); WIRTH, Uwe, D-63801 Kleinostheim (DE)
(86) Internationale Anmeldenummer: EP9401712
(87) Internationale Veröffentlichungsnummer: WO9429218

(56) Entgegenhaltungen:
- EP-A- 0 568 918
- NATURE, Bd.347, Nr.6291, 27. September 1990, LONDON GB Seiten 354 - 358 W. KRAETSCHMER ET AL. in der Anmeldung erwähnt
- D.M. COX ET AL. 'ACS SYMPOSIUM SERIES 481 : "Fullerenes"' 1992 , AMERICAN CHEMICAL SOCIETY , WASHINGTON,DC,US siehe Seite 117 - Seite 125 siehe Seite 123 - Seite 124
- APPLIED PHYSICS LETTERS, Bd.62, Nr.5, 1. Februar 1993, NEW YORK US Seiten 531 - 532 J.Z. LIU ET AL. in der Anmeldung erwähnt

## Beschreibung

Fullerenhaltiger Ruß wird bevorzugt nach dem Verfahren von Krätschmer und Huffman durch das Verdampfen von Graphit im Lichtbogen erzeugt. Die Isolierung der C₆₀- und C₇₀-Fullerene erfolgt überwiegend nach dem literaturbekannten Verfahren der Toluolextraktion mit nachgeschalteter Säulenchromatographie (Krätschmer, W. et al., Nature 347, 1990, S.354). Nur vereinzelt wird zur Herstellung spezieller Proben und dünner Schichten C₆₀ und C₇₀ durch Sublimation gereinigt (Lin, J.Z. et al., Appl. Phys. Lett. 62(5), 1993).

Die Aufarbeitung des fullerenhaltigen Rußes mit Lösemitteln weist eine Reihe von Problemen auf:
- große Lösemittelströme wegen geringer Löslichkeit;
- lange Verweilzeit auf der Chromatographiesäule, Zersetzungsgefahr;
- umfangreiche, energieintensive Lösemittelaufarbeitung.

Es wurde nun gefunden, daß Fullerene mittels Sublimation vom Ruß abgetrennt werden können, indem Energie durch Mikrowellen, die mit dem Ruß koppeln, eingetragen wird und die sublimierten Fullerendämpfe mit Hilfe eines Inertgasstroms, der auf 300 bis 1000 K vorgeheizt werden kann, vom Ruß separiert und in einer Kondensationszone abgeschieden werden.

Die Erfindung betrifft somit ein Verfahren zur Abtrennung von Fullerenen aus fullerenhaltigem Ruß, in welchem der Ruß durch Mikrowellen beheizt und mit einem Trägergasstrom überlagert wird.

Durch Mikrowellen wird der fullerenhaltige Ruß auf 600 bis 1300 K erhitzt. Das Erhitzen des Rußes kann durch Mikrowellen mit eine Frequenz von 433 bis 24125 MHZ erfolgen. Es wird ein Trägergasstrom überlagert, der die verdampfenden Fullerene aufnimmt. Über ein temperaturfestes Filter werden mitgerissene Rußpartikel abgetrennt. Danach wird der fullerenhaltige Trägergasstrom zur fraktionierten Fullerenabscheidung schrittweise abgekühlt. Die Sublimation kann bei Atmosphärendruck oder bei vermindertem Druck von ≤ 1000 mbar durchgeführt werden.

Die Beladung des Trägergasstromes kann sowohl im Teilvakuum, als auch bei leichtem Überdruck stattfinden. Arbeitsdrücke im Bereich von 1 mbar bis 2 bar sind möglich, bevorzugt wird im Bereich des Umgebungsdrucks gearbeitet.

Als Trägergase für den erfindungsgemäßen Prozeß kommen Edelgase wie Helium, Neon und Argon sowie andere inerte Gase in Frage. Grundsätzlich können für den erfindungsgemäßen Prozeß auch zwei oder mehrere der genannten Gase als Gemisch eingesetzt werden.

Der Volumenstrom des Trägergases kann in weiten Bereichen schwanken und ist im wesentlichen abhängig von der Geometrie der Apparatur. Dementsprechend ist die Strömungsgeschwindigkeit ebenfalls in weiten Bereichen variabel. Es kann bei einer Strömungsgeschwindigkeit von 0,1 bis 100 m/sec, bevorzugt von 5 bis 15 m/sec, gearbeitet werden. Das Fulleren kann jedoch auch bei niedrigeren bzw. höheren Geschwindigkeiten ausgetragen werden. Bevorzugt wird mit einer Strömungsgeschwindigkeit gearbeitet, die die Ausbildung eines Wirbelbetts erlaubt. Es kann aber auch bei Strömungsgeschwindigkeiten gearbeitet werden, die zur Ausbildung eines Fließbettes bzw. durchströmten Festbettes führen.

Auch die Temperatur des eingetragenen Gases kann in weiten Bereichen schwanken und wird sich danach richten welche Fullerenspezies isoliert werden sollen. Zur Isolierung von C₆₀ und/oder C₇₀ wird das Trägergas bevorzugt auf einen Temperaturbereich von 700 bis 1000 K vorgeheizt. Die Abscheidung der kristallinen Fullerene kann dagegen unterhalb von ca. 600 °C stattfinden.

Die Kombination von Erhitzen des fullerenhaltigen Rußes durch Mikrowelle und Überlagern eines Trägergasstromes bewirkt eine signifikante Geschwindigkeits-Ausbeutesteigerung gegenüber herkömmlichen Verfahren und auch gegenüber der Einzelanwendung der beiden Schritte. Das Verfahren der Mikrowellen-Transportgas-Wirbelbett-Sublimation liefert innerhalb einiger Minuten Einstrahldauer hohe Fullerenausbeuten von über 80 %.

Im folgenden wird die Erfindung anhand eines Beispiels näher erläutert:

### Beispiel

In einem handelsüblichen Labormikrowellengerät vom Typ MLS 1200 der Firma Büchi GmbH, D-7320 Göppingen wird in einem senkrechtstehenden Quarzglasrohr (Länge: 150 mm, Innendurchmesser: 20 mm) fullerenhaltiger Ruß mittels Mikrowellen (800 Watt) erhitzt. Die Rußprobe wird durch eine Quarzfritte im senkrechtstehenden Rohr gehalten. Der von unten kommende Trägergasstrom, vorzugsweise Helium, 250 l/h, durchströmt die Probe und erzeugt ein Wirbelbett. Weiterhin sorgt der Gasstrom für den Abtransport der sublimierten Fullerene in die Kondensationszone. Die Kondensationszone ist in diesem Beispiel der Raum im Quarzrohr über der Probe, der mit Quarzwolle gefüllt ist.

Es wurde 5 mal 1 Minute lang bei 800 Watt eingestrahlt. Zwischen den Heizphasen lag jeweils eine Abkühlphase von 1 Minute. Diese Vorgehensweise gewährleistete, daß die Sublimationstemperatur nicht über 800°C anstieg.

Die HPLC-Analyse von Kondensat ergibt eine Ausbeute von 80 % und eine Zusammensetzung von 75 % C₆₀ und 25 % C₇₀.

## Patentansprüche

1. Verfahren zur Abtrennung von Fullerenen aus fullerenhaltigem Ruß, dadurch gekennzeichnet, daß der Ruß durch Mikrowellen beheizt und mit einem Trägergasstrom überlagert wird.

2. Verfahren nach Anspruch 1, dadurch gekennzeichnet, daß als Trägergas inerte Gase eingesetzt werden.

3. Verfahren nach Anspruch 1 oder 2, dadurch gekennzeichnet daß der Ruß durch Mikrowellen mit einer Frequenz von 403 bis 24.125 MHz erhitzt wird.

4. Verfahren nach einem oder mehreren der Ansprüche 1 bis 3, dadurch gekennzeichnet, daß bei einer Strömungsgeschwindigkeit des Trägergases von 0,1 bis 100 m/sec gearbeitet wird.

## Claims

1. A method for separating off fullerenes from fullerene-containing carbon black, which comprises heating the carbon black by microwaves and blanketing with a carrier gas stream.

2. The method as claimed in claim 1, wherein inert gases are used as carrier gas.

3. The method as claimed in claim 1 or 2, wherein the carbon black is heated by microwaves having a frequency of 403 to 24,125 MHz.

4. The method as claimed in one or more of claims 1 to 3, wherein a carrier gas flow velocity of 0.1 to 100 m/sec is employed.

## Revendications

1. Procédé de séparation de fullérènes à partir de la suie contenant des fullérènes, caractérisé en ce que l'on chauffe la suie par microondes et on superpose un flux de gaz porteur.

2. Procédé selon la revendication 1, caractérisé en ce qu'on utilise comme gaz porteur des gaz inertes.

3. Procédé selon la revendication 1 ou 2, caractérisé en ce qu'on chauffe la suie par microondes ayant une fréquence de 403 à 24.125 MHz.

4. Procédé selon une ou plusieurs des revendications 1 à 3, caractérisé en ce qu'on travaille à une vitesse d'écoulement du gaz porteur de 0,1 à 100 m/sec.
